# FASCICULE DE BREVET EUROPEEN

(11) **EP 2 447 510 B1**
(45) Date de publication et mention de la délivrance du brevet: **28.08.2013**
(21) Numéro de dépôt: 11008168.4
(22) Date de dépôt: 10.10.2011
(51) Int. Cl.: F02C 9/28, F02C 9/42, F02C 9/46, B64D 31/00

(54) **Installation motrice d'un aéronef, aéronef et procédé de pilotage dudit aéronef**
Triebwerk eines Flugzeugs, Flugzeug und Verfahren zur Steuerung dieses Flugzeugs
Powerplant of an aircraft, aircraft and method for piloting said aircraft

(30) Priorité: 29.10.2010 FR 1004274
(43) Date de publication de la demande: 02.05.2012
(73) Titulaire: EUROCOPTER, 13725 Marignane Cédex (FR)
(72) Inventeur: Camhi, Emmanuel, 13710 Fuveau (FR)
(74) Mandataire: Pouillot, Laurent Pierre Paul

(56) Documents cités:
- WO-A2-2010/143051
- FR-A1- 2 888 287
- US-A- 5 873 546

## Description

La présente invention concerne une installation motrice d'un aéronef, notamment un giravion, et un procédé de pilotage dudit aéronef.

La plupart des giravions construits actuellement sont équipés d'un ou deux turbomoteurs à turbine libre. La puissance est alors prélevée sur une turbine basse pression, dénommée « turbine libre », laquelle est mécaniquement indépendante de l'ensemble du compresseur et de l'étage haute pression, comprenant notamment une turbine haute pression, du turbomoteur. La turbine libre d'un turbomoteur tournant généralement entre 20 000 et 50 000 tours par minute, une boîte de réduction de vitesse est nécessaire pour la liaison au rotor principal du giravion dont le régime de rotation est sensiblement compris entre 200 et 400 tours par minute: il s'agit de la boîte de transmission principale de puissance dite plus simplement boîte de transmission principale.

Les limitations thermiques d'un turbomoteur, et les limitations en couple d'une boîte de transmission principale, permettent de définir une enveloppe d'utilisation du turbomoteur englobant deux régimes normaux d'utilisation d'un turbomoteur agencé sur un giravion monomoteur ou bimoteur:
- le régime de décollage correspondant à un niveau de couple pour la boîte de transmission principale et un échauffement du turbomoteur admissibles pendant un temps limité sans dégradation notable, ce régime de décollage étant défini par une puissance maximale au décollage PMD et une durée d'utilisation de cette puissance maximale au décollage généralement de l'ordre de cinq minutes,
- le régime maximal continu, ce régime maximal continu étant défini par une puissance maximale en continu PMC correspondant environ à 90% de la puissance maximale au décollage PMD et par une durée d'utilisation de cette puissance maximale en continu généralement illimitée.

Sur un giravion bimoteur, l'enveloppe de performances englobe aussi des régimes de surpuissance d'urgence, uniquement utilisés lorsque l'un des deux turbomoteurs est en panne :
- le premier régime d'urgence, ce premier régime d'urgence étant défini par une puissance de super urgence PSU souvent égale à environ 112% à 120% de la puissance maximale au décollage PMD et par une durée d'utilisation de cette puissance de super urgence PSU généralement de l'ordre trente secondes consécutives au maximum, la puissance de super urgence étant classiquement utilisable trois fois pendant un vol,
- le deuxième régime d'urgence, ce deuxième régime d'urgence étant défini par une puissance maximale d'urgence PMU égale à environ 105% à 110% de la de la puissance maximale au décollage PMD et par une durée d'utilisation de cette puissance maximale d'urgence PMU de l'ordre deux minutes consécutives au maximum ;
- le troisième régime d'urgence, ce troisième régime d'urgence étant défini par une puissance intermédiaire d'urgence PIU sensiblement égale à la puissance maximale au décollage PMD et par une durée d'utilisation illimitée de cette puissance intermédiaire d'urgence PIU pour le reste du vol après la panne du turbomoteur.

Ainsi, le motoriste définit une enveloppe d'utilisation du turbomoteur, cette enveloppe d'utilisation comprenant une pluralité de régimes, chaque régime associant une puissance développée par le turbomoteur et une durée d'utilisation de cette puissance.

Par ailleurs, les contraintes thermiques et mécaniques et surtout le phénomène de fluage des aubes de turbine peuvent entraîner une dégradation du turbomoteur, plus ou moins importante selon les régimes. Pour garantir la sécurité du vol et l'obtention des performances, il est alors impératif de déterminer l'endommagement maximal acceptable pour un turbomoteur.

Par suite, on évalue le potentiel global d'utilisation du turbomoteur. Cela revient concrètement à définir un nombre d'heures de vol maximal, dénommé TBO (« *Time Between Overhaul »* en langue anglaise) par l'homme du métier, que le turbomoteur est capable d'effectuer à compter de sa dernière révision ou de sa première utilisation, suivant le cas dans lequel on se trouve. Une fois ce nombre d'heures de vol maximal atteint, le turbomoteur est déposé puis révisé.

Dans la suite du texte et par commodité, on entendra par « dernière révision du turbomoteur » soit la première utilisation du turbomoteur soit effectivement la dernière révision de ce dernier.

Ainsi, le motoriste définit une enveloppe d'utilisation du turbomoteur associée à un nombre d'heures de vol maximal, cette enveloppe d'utilisation comprenant une pluralité de régimes, chaque régime associant une puissance développée par le turbomoteur et une durée d'utilisation de cette puissance. De plus, le motoriste associe un nombre d'heures de vol maximal à cette enveloppe d'utilisation

On rappelle qu'un turbomoteur est usuellement muni d'un moyen de contrôle, les informations relatives aux régimes d'une enveloppe étant stockées dans ce moyen de contrôle. Dès lors, lorsque le pilote d'un aéronef requiert l'utilisation d'un régime donné, ce moyen de contrôle commande le turbomoteur et notamment son doseur à carburant afin que le turbomoteur réponde à l'ordre donné.

Par ailleurs, pour qu'un giravion obtienne son autorisation de vol dans un pays déterminé, on comprend que l'enveloppe d'utilisation ainsi que le nombre d'heures de vol maximal du ou des turbomoteurs du giravion soient certifiés par les services officiels du pays considéré pour un spectre d'utilisation précis. Cette autorisation ne survient donc qu'à l'issue d'essais de certification complets très onéreux.

Ces essais de certification complets d'un turbomoteur étant réalisés pour justifier une enveloppe d'utilisation associée à un nombre d'heures de vol maximal, il n'est pas possible d'utiliser le turbomoteur selon une enveloppe de performances différente de l'enveloppe de performances initialement autorisée, sans réaliser des essais de certification complets très onéreux.

On comprend qu'un turbomoteur donné peut correspondre à un type de mission. Toutefois, ce turbomoteur risque de ne pas avoir un étagement optimisé des régimes de son enveloppe d'utilisation pour un type de mission alternatif.

Par exemple, une mission de sauvetage par hélitreuillage nécessite le fonctionnement d'un turbomoteur selon une enveloppe d'utilisation différente d'une enveloppe d'utilisation optimisée pour une simple mission de convoyage.

Dès lors, une enveloppe d'utilisation permet la réalisation d'un type de mission mais ne permet pas a priori la réalisation d'un autre type de mission, du moins pas de manière optimisée.

Par ailleurs, les règlements et par exemple la réglementation européenne opérationnelle dite « JAR-OPS3 » impose aux constructeurs d'assurer la sécurité de l'aéronef, notamment lors de phases de décollage et d'atterrissage.

Les exigences varient en fonction de l'aire de décollage. En effet, les règlements existants définissent divers types d'aires de décollage telles qu'un héliport, un héliport ponctuel et une plateforme. Par exemple, le règlement JAR-OPS3 indique qu'une plateforme est une aire de décollage située à au moins trois mètres au dessus de la surface qui l'entoure, cette plateforme étant dénommée « elevated heliport » en langue anglaise.

Une fois un type attribué à une aire de décollage, on définit l'environnement de cette aire de décollage, cet environnement pouvant être un environnement hostile ou non dégagé, par exemple.

Enfin, les règlements définissent notamment le type d'atterrissage possible après une panne moteur pour un giravion bimoteur. Par exemple, le règlement JAR-OPS3 mentionne trois classes 1, 2 et 3 dénommées « performances class » en langue anglaise.

Dès lors, le constructeur doit mettre en place des procédures de décollage et d'atterrissage permettant d'assurer la sécurité de l'aéronef selon les critères requis par la réglementation, ces procédures pouvant varier d'un aéronef à un autre et en fonction de la classe associée à une aire de décollage.

Le constructeur d'un aéronef établit alors de telles procédures de décollage et d'atterrissage en fonction des capacités de cet aéronef.

On comprend qu'une installation motrice ayant une enveloppe d'utilisation figée donne une marge de manoeuvre faible au constructeur pour établir des procédures d'atterrissage et de décollage optimisées.

Or, en optimisant ces procédures d'atterrissage et de décollage, il est possible de maximiser la masse maximale transportable par le giravion.

Par suite, un aéronef muni d'une installation motrice fonctionnant selon une enveloppe d'utilisation figée limite :
- les missions pouvant être effectuées par cet aéronef, et
- le choix de procédures d'atterrissage et de décollage, et par suite la masse maximale transportable.

Classiquement, un constructeur choisit au moment du développement de l'aéronef une installation motrice ayant une enveloppe d'utilisation apte à répondre aux besoins usuels de la plupart de ses clients, puis établit les meilleures procédures de décollage et d'atterrissage permises par cette installation motrice.

Il est aussi concevable d'utiliser une installation motrice surdimensionnée pour la réalisation de multiples missions. Cependant, une telle installation motrice est d'une part onéreuse, et, d'autre part pénalisante d'un point de vue massique.

Selon le document FR 2 878 288, il est possible de modifier une enveloppe d'utilisation d'un turbomoteur en modifiant le nombre d'heures de vol maximal.

Selon le document FR 2 888 288, à partir d'une enveloppe d'utilisation initiale, on établit une enveloppe alternative. Le passage de l'enveloppe d'utilisation initiale vers l'enveloppe alternative se fait sans modification du nombre d'heures de vol maximal du turbomoteur mais en baissant la valeur d'un paramètre de l'enveloppe initiale. Par exemple, on augmente la puissance d'un régime donné, mais on baisse la durée d'utilisation de ce régime.

L'état de la technique inclut aussi les documents EP 1 281 846 et FR 2 602 270 évoquant la possibilité de réévaluer les limites d'un moteur en cas d'urgence.

L'état de la technique inclut aussi le document US 5, 873, 546.

Dans ces conditions, la présente invention a pour objet une installation motrice d'un aéronef, un aéronef, et un procédé de pilotage dudit aéronef pour permettre l'utilisation d'un même aéronef selon de multiples spectres d'utilisation sans modification de l'installation motrice de l'aéronef.

Selon l'invention, une installation motrice ayant les caractéristiques de la revendication 1 est munie de deux moteurs et d'un moyen de contrôle de ces moteurs. Plus particulièrement, l'installation motrice peut être une installation motrice d'un giravion munie de deux turbomoteurs.

De plus, le moyen de contrôle comprend une mémoire, cette mémoire contenant des informations pour faire fonctionner le moteur selon au moins deux enveloppes d'utilisation distinctes durant un nombre d'heures de vol maximal et non pas selon une unique enveloppe, chaque enveloppe d'utilisation comprenant au moins deux régimes d'utilisation définis chacun par une puissance développée et une durée d'utilisation de cette puissance développée.

Par exemple, si le moyen de contrôle agit sur les limites du moteur et/ ou sur le doseur à carburant de ce moteur, ladite mémoire contient les limites et/ ou la position du doseur carburant associés à chaque régime de chaque enveloppe. On se référera à la littérature pour obtenir des compléments relatifs au fonctionnement d'un moteur et de son moyen de contrôle.

Ainsi, l'installation motrice peut fonctionner selon une pluralité d'enveloppes d'utilisation qui sont toutes associées à un même nombre d'heures de vol maximal. En fonction du besoin, le pilote choisit l'enveloppe la plus adaptée à la mission.

Par exemple, il est possible de prévoir une enveloppe pour des missions de convoyage et une enveloppe pour des missions d'hélitreuillage.

Selon un autre contexte, il est envisageable de certifier l'installation motrice pour au moins une enveloppe permettant d'optimiser la procédure de décollage à partir d'une plateforme et au moins une enveloppe adaptée pour optimiser la procédure de décollage à partir d'une zone de décollage distincte d'une plateforme.

On note que l'on appelle « zone de décollage » toutes les aires de décollage à l'exception des plateformes.

Un aéronef classique comporte une installation motrice qui est soit surdimensionnée, soit adaptée à un seul des décollages à réaliser.

A l'inverse, l'invention permet d'utiliser une installation motrice ayant des dimensions raisonnables et étant certifiée pour au moins deux enveloppes permettant d'assurer un décollage de manière optimale à partir d'une plateforme et de zones de décollage n'incluant pas les plateformes. Le constructeur d'un giravion n'est alors plus limité par l'utilisation d'une unique enveloppe.

Par exemple, par rapport à une enveloppe classique d'un giravion bimoteur englobant notamment un premier, un deuxième et un troisième régimes d'urgence :
- on peut définir une enveloppe optimisée pour un décollage à partir d'une plateforme en augmentant la puissance de super urgence et en baissant la puissance maximale d'urgence par rapport à une enveloppe classique pour maintenir constant le nombre d'heures de vol maximal, et
- on peut définir une enveloppe optimisée pour un décollage à partir d'une zone de décollage distincte d'une plateforme en augmentant la puissance maximale d'urgence et en baissant la puissance de super urgence par rapport à une enveloppe classique pour maintenir constant le nombre d'heures de vol maximal.

Il n'y a pas lieu de remplacer le moteur ou de reprogrammer le moyen de contrôle entre deux missions.

Des enveloppes relatives à des procédures d'atterrissages sont envisageables.

De plus, l'invention peut comprendre une ou plusieurs des caractéristiques qui suivent.

Ainsi, l'installation motrice peut comporter un moyen de sélection manoeuvrable par un pilote, ce moyen de sélection étant lié au moyen de contrôle afin que le pilote puisse choisir l'enveloppe d'utilisation selon laquelle le moteur doit fonctionner.

Le pilote manoeuvre alors le moyen de sélection, par exemple avant d'allumer les moteurs de l'installation, pour requérir le fonctionnement des moteurs selon l'enveloppe la plus adéquate en fonction de la mission à effectuer.

De plus, l'installation motrice peut comporter un moyen de sécurité pour garantir la sélection volontaire d'une enveloppe avant le début d'un vol.

Ce moyen de sécurité est par exemple une position d'arrêt du moyen de sélection. Par exemple, le moyen de sélection comprend une première position permettant de sélectionner une première enveloppe d'utilisation, une deuxième position permettant de sélectionner une deuxième enveloppe d'utilisation, et une position d'arrêt liée à aucune enveloppe d'utilisation.

Pour arrêter l'installation motrice, il convient alors de positionner le moyen de sélection sur la position d'arrêt. Dès lors, afin de démarrer l'installation motrice, le pilote doit alors obligatoirement choisir une enveloppe d'utilisation.

Par ailleurs, l'installation motrice peut comprendre un moyen de visualisation affichant soit l'enveloppe d'utilisation, soit le régime d'utilisation mis en oeuvre par l'installation motrice, soit l'enveloppe d'utilisation et le régime d'utilisation de cette l'enveloppe d'utilisation qui sont mis en oeuvre par l'installation motrice.

Selon un autre aspect, l'installation motrice comprenant deux moteurs, chaque enveloppe d'utilisation comportant au moins un régime d'urgence utilisable lorsqu'un des moteurs tombe en panne, un régime d'urgence d'une enveloppe diffère d'un régime d'urgence d'une autre enveloppe.

Ainsi, il est notamment possible de prévoir des procédures de décollage significativement différentes en fonction de la configuration de l'aire de décollage.

L'installation motrice comprenant deux moteurs d'un aéronef, le moyen de sélection peut comporter par exemple au moins deux positions associées chacune à une enveloppe d'utilisation, lesdites deux positions étant à choisir dans une liste comprenant :
- une première position pour décoller à partir d'une plateforme située à une première hauteur avec une masse maximale transportable par l'aéronef qui requiert le fonctionnement des moteurs selon une première enveloppe d'utilisation,
- une deuxième position pour décoller à partir d'une plateforme située à une deuxième hauteur avec une masse maximale transportable par l'aéronef qui requiert le fonctionnement des moteurs selon une deuxième enveloppe d'utilisation,
- une troisième position pour décoller à partir d'une zone de décollage ayant une première aire de dégagement et distincte d'une plateforme avec une masse maximale transportable par l'aéronef qui requiert le fonctionnement des moteurs selon une troisième enveloppe d'utilisation,
- une quatrième position pour décoller à partir d'une zone de décollage ayant une deuxième aire de dégagement et distincte d'une plateforme avec une masse maximale transportable qui requiert le fonctionnement des moteurs selon une quatrième enveloppe d'utilisation.

Par exemple, chaque enveloppe ayant un premier régime d'urgence durant lequel un moteur peut développer une puissance de super urgence durant un premier temps donné, un deuxième régime d'urgence durant lequel un moteur peut développer une puissance maximale d'urgence durant un deuxième temps donné et un troisième régime d'urgence durant lequel un moteur peut développer une puissance intermédiaire d'urgence en continu, ces régimes d'urgence étant mis en oeuvre lorsqu'un moteur tombe en panne :
- pour la première enveloppe, la puissance de super urgence atteint une valeur de super urgence élevée par exemple de l'ordre de 1100 kilowatts, la puissance maximale d'urgence atteint une valeur maximale d'urgence limitée par exemple de l'ordre de 600 kilowatts, la puissance intermédiaire d'urgence étant égale à une valeur intermédiaire d'urgence limitée par exemple de l'ordre de 450 kilowatts,
- pour la deuxième enveloppe d'utilisation, la puissance de super urgence atteint une première valeur de super urgence médiane par exemple de l'ordre de 1000 kilowatts, la puissance maximale d'urgence atteint une première valeur maximale d'urgence élevée par exemple de l'ordre de 700 kilowatts, la puissance intermédiaire d'urgence étant égale à une première valeur intermédiaire d'urgence médiane par exemple de l'ordre de 500 kilowatts,
- pour le troisième enveloppe d'utilisation, la puissance de super urgence atteint une deuxième valeur de super urgence médiane par exemple de l'ordre de 900 kilowatts, la puissance maximale d'urgence atteint une deuxième valeur maximale d'urgence élevée par exemple de l'ordre de 650 kilowatts, la puissance intermédiaire d'urgence étant égale à une valeur intermédiaire d'urgence élevée par exemple de l'ordre de 600 kilowatts, et
- pour la quatrième enveloppe d'utilisation, la puissance de super urgence atteint une valeur de super urgence limitée par exemple de l'ordre de 800 kilowatts, la puissance maximale d'urgence atteint une valeur maximale d'urgence élevée par exemple de l'ordre de 800 kilowatts, la puissance intermédiaire d'urgence étant égale à une valeur intermédiaire d'urgence médiane par exemple de l'ordre de 500 kilowatts.

Ces enveloppes d'utilisation permettent alors de couvrir un spectre d'utilisation de l'aéronef élargi en optimisant la masse transportable par l'aéronef.

Un moyen de sélection à au moins quatre positions peut être envisagé pour inclure la première position, la deuxième position, la troisième position et la quatrième position précitées.

Le passage d'une enveloppe de décollage à une enveloppe d'atterrissage peut être réalisé automatiquement durant une phase de vol de croisière.

Outre une installation motrice, l'invention vise un aéronef muni d'une telle installation motrice, un aéronef à voilure tournante notamment et plus particulièrement un giravion de type hélicoptère.

De plus, l'invention a aussi pour objet un procédé de pilotage d'un aéronef muni d'une telle installation motrice comportant au moins un moteur et un moyen de contrôle dudit moteur. Selon ce procédé ayant les étapes de la revendication 8 :
- on définit une liste d'enveloppes d'utilisation du moteur, cette liste comprenant au moins deux enveloppes d'utilisation distinctes associées à un même nombre d'heures de vol maximal du moteur, chaque enveloppe d'utilisation comprenant au moins deux régimes d'utilisation définis chacun par une puissance développée et une durée d'utilisation de cette puissance développée,
- on mémorise les enveloppes d'utilisation dans le moyen de contrôle,
- on choisit avant le décollage l'enveloppe à utiliser parmi ladite liste en fonction de la mission à effectuer.

En outre, l'installation motrice comprenant deux moteurs, on définit pour chaque enveloppe d'utilisation au moins un régime d'urgence utilisable lorsqu'un desdits moteurs tombe en panne, un régime d'urgence d'une enveloppe différent d'un régime d'urgence d'une autre enveloppe.

De plus, on peut mémoriser au moins deux enveloppes comprenant une enveloppe permettant d'assurer un décollage de manière optimale à partir d'une plateforme et une autre enveloppe permettant d'assurer un décollage de manière optimale à partir de zones de décollage n'incluant pas les plateformes

Par exemple, l'installation motrice comprenant deux moteurs, la liste comporte au moins deux enveloppes d'utilisation distinctes pouvant être utilisées selon un même nombre d'heures de vol, cette liste comprenant :
- une première enveloppe d'utilisation pour décoller à partir d'une plateforme située à une première hauteur avec une masse maximale transportable par l'aéronef,
- une deuxième enveloppe d'utilisation pour décoller à partir d'une plateforme située à une deuxième hauteur avec une masse maximale transportable par l'aéronef,
- une troisième enveloppe d'utilisation pour décoller à partir d'une zone de décollage ayant une première aire de dégagement et distincte d'une plateforme avec une masse maximale transportable par l'aéronef,
- une quatrième enveloppe d'utilisation pour décoller à partir d'une zone de décollage ayant une deuxième aire de dégagement et distincte d'une plateforme avec une masse maximale transportable par l'aéronef.

L'invention et ses avantages apparaîtront avec plus de détails dans le cadre de la description qui suit avec des exemples de réalisation donnés à titre illustratif en référence aux figures annexées qui représentent :
- la figure 1, un schéma présentant un aéronef selon l'invention et explicitant le procédé mis en oeuvre,
- la figure 2, un schéma explicitant une phase de décollage d'une plateforme,
- la figure 3, un schéma explicitant une phase de décollage de la terre ferme, et
- les figures 4 à 7, des schémas explicitant une variante de l'invention.

Les éléments présents dans plusieurs figures distinctes sont affectés d'une seule et même référence.

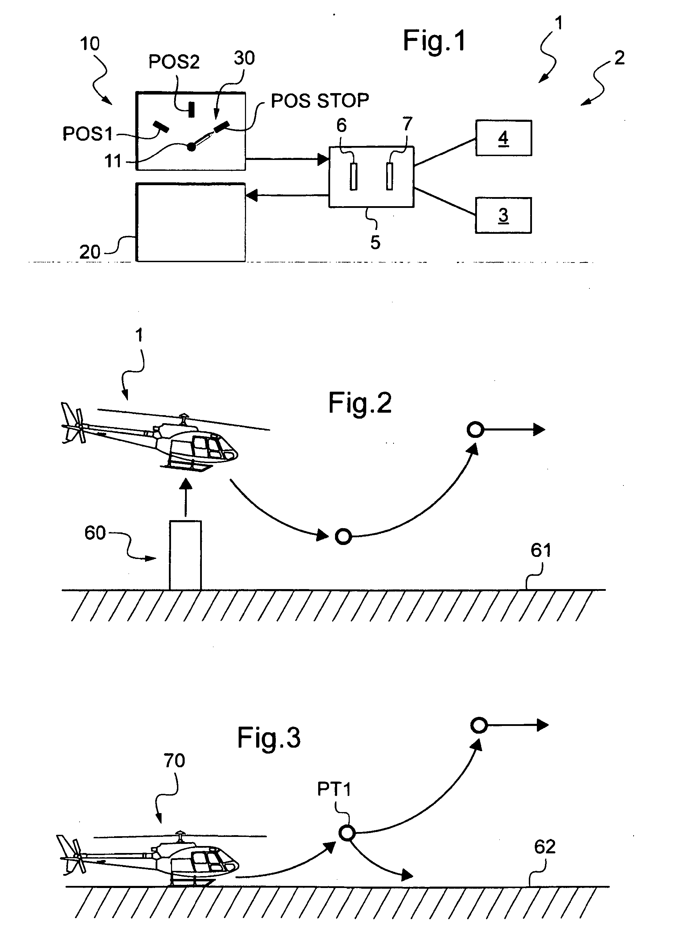

La figure 1 présente un aéronef 1 selon l'invention, cet aéronef 1 étant muni d'une voilure tournante par exemple tel qu'un hélicoptère.

Cet aéronef 1 comporte une installation motrice 2 pour notamment permettre la propulsion de cet aéronef, éventuellement en entraînant en rotation une voilure tournante. Cette installation motrice est munie de deux turbomoteurs 3, 4 sur l'exemple représenté.

L'installation motrice 2 possède alors un moyen de contrôle 5 des moteurs 3, 4. Ce moyen de contrôle 5 peut comprendre un unique boîtier gérant les moteurs ou encore un boîtier par moteur. Un tel moyen de contrôle est parfois connu sous l'acronyme « E.E.C.U ».

Le moyen de contrôle 5 gère alors les moteurs 3, 4 afin que ces moteurs développent la puissance requise par le pilote.

Ce moyen de contrôle 5 comprend alors un processeur 7 ou équivalent pour gérer les moteurs 3, 4, en contrôlant par exemple le débit du carburant alimentant ces moteurs.

Selon l'invention, on définit une liste d'enveloppes d'utilisation des moteurs 3, 4. Cette liste comprend alors au moins deux enveloppes d'utilisation distinctes associées à un même nombre d'heures de vol maximal, chaque enveloppe d'utilisation comprenant au moins deux régimes d'utilisation définis chacun par une puissance développée et une durée d'utilisation de cette puissance développée.

De plus, le moyen de contrôle 5 comprenant une mémoire 6, on mémorise les enveloppes d'utilisation dans la mémoire 6 du moyen de contrôle 5, à savoir les informations dont a besoin le moyen de contrôle pour mettre en oeuvre ces enveloppes d'utilisation.

Par exemple, chaque enveloppe comprend un régime de décollage défini par une puissance maximale au décollage PMD et une durée d'utilisation de cette puissance maximale au décollage ainsi qu'un régime maximal continu défini par une puissance maximale en continu PMC et par une durée d'utilisation illimitée de cette puissance maximale en continu.

Par contre, la valeur de la puissance maximale au décollage PMD et / ou sa durée d'utilisation peut varier d'une enveloppe à l'autre. De même, la valeur de la puissance maximale en continu PMC peut varier d'une enveloppe à l'autre.

Sur un giravion bimoteur du type représenté, chaque enveloppe d'utilisation peut aussi englober des régimes de surpuissance d'urgence, uniquement utilisés lorsque l'un des deux moteurs est en panne. Notamment, chaque enveloppe d'utilisation peut comprendre :
- un premier régime d'urgence défini par une puissance de super urgence PSU et par une durée d'utilisation D1 en continu de cette puissance de super urgence PSU voire un nombre maximal d'utilisations de ce premier régime d'urgence durant un même vol,
- un deuxième régime d'urgence défini par une puissance maximale d'urgence PMU et par une durée d'utilisation D2 de cette puissance maximale d'urgence PMU ;
- un troisième régime d'urgence défini par une puissance intermédiaire d'urgence PIU et par une durée d'utilisation D3 illimitée de cette puissance intermédiaire d'urgence PIU pour le reste du vol après la panne du turbomoteur.

Les valeurs des paramètres de ces régimes d'urgence peuvent varier d'une enveloppe à une autre.

Dès lors, un pilote choisit avant le décollage l'enveloppe à utiliser parmi la liste prédéfinie en fonction de la mission à effectuer.

De plus, on comprend que cette liste permet d'offrir au constructeur de multiples options. Le constructeur peut ainsi optimiser ses procédures de décollage et d'atterrissage pour optimiser la masse transportable par l'aéronef 1.

Par ailleurs, l'installation motrice peut être équipée d'un moyen de sélection 10 communiquant avec le moyen de contrôle 5 pour indiquer à ce moyen de contrôle 5 l'enveloppe d'utilisation choisie par le pilote.

Ce moyen de sélection 10 est muni d'un bouton rotatif 11 ou équivalent manoeuvrable par le pilote. En fonction de la position de ce bouton rotatif 11, le moyen de contrôle détermine l'enveloppe sélection née.

Par exemple, le moyen de sélection comporte une première position POS1 et une deuxième position POS2 pour requérir la mise en oeuvre respectivement d'une première enveloppe d'utilisation et d'une deuxième enveloppe d'utilisation permettant respectivement d'assurer un décollage de manière optimale à partir d'une plateforme et un décollage de manière optimale à partir de zones de décollage n'incluant pas les plateformes.

En outre, il est possible de munir l'installation motrice 2 d'un moyen de sécurité 30 pour garantir que le pilote a choisi une enveloppe d'utilisation avant de décoller.

Ce moyen de sécurité 30 peut comprendre une position d'arrêt POSSTOP du moyen de sélection 10. A l'arrêt, le bouton rotatif 11 du moyen de sélection est alors sur cette position d'arrêt POSSTOP. Le moyen de contrôle peut alors éventuellement interdire le démarrage des moteurs 3, 4 tant que le pilote n'a pas choisi une enveloppe d'utilisation en manoeuvrant le bouton rotatif 11.

De plus, l'installation motrice 2 présentée comprend un moyen de visualisation 20 coopérant avec le moyen de contrôle 5. Le moyen de contrôle 5 indique au moyen de visualisation l'enveloppe d'utilisation sélectionnée et le régime d'utilisation de l'enveloppe d'utilisation sélectionnée, mis en oeuvre en temps réel.

Dès lors, le moyen de visualisation peut afficher soit l'enveloppe d'utilisation utilisée, soit le régime d'utilisation mis en oeuvre par l'installation motrice 2, soit l'enveloppe d'utilisation et le régime d'utilisation de cette l'enveloppe d'utilisation qui sont mis en oeuvre par l'installation motrice 2.

Par ailleurs, la mise à disposition du pilote d'une pluralité d'enveloppes d'utilisation permet de prévoir des procédures de décollage nécessitant des régimes distincts en fonction de la nature de l'aire de décollage.

En référence aux figures 2 et 3, il est possible d'optimiser la masse transportable par l'aéronef 1 en mettant en oeuvre l'invention indépendamment de la nature de l'aire de décollage.

Par exemple, l'aéronef 1 présenté est muni d'une installation motrice comportant au moins deux enveloppes d'utilisation, une première enveloppe d'utilisation privilégiant une puissance de super urgence élevée et une deuxième enveloppe privilégiant une puissance maximale d'urgence élevée.

La figure 2 explicite une procédure de décollage d'un giravion 1, à savoir un aéronef à voilure tournante à partir d'une aire de décollage de type plateforme 60 agencée au dessus d'une surface 61 de type mer par exemple. On entend par hauteur la distance séparant ladite surface 61 de la plateforme.

Le pilote du giravion 1 bimoteur choisit alors la première enveloppe décrite puis décolle verticalement à partir de la plateforme.

Si un moteur du giravion 1 tombe en panne, le pilote utilise la puissance de super urgence élevée pour contrôler la chute du giravion 1 vers la mer, puis met en oeuvre la puissance intermédiaire d'urgence pour remonter et poursuivre son vol. Il est à noter que la deuxième enveloppe ne permettrait pas une telle procédure, ou du moins avec une masse transportable relativement importante.

A l'inverse, la figure 3 explicite une procédure de décollage d'un giravion 1 à savoir un aéronef à voilure tournante à partir d'une zone de décollage 70, cette zone de décollage 70 n'étant pas une plateforme.

Le pilote du giravion 1 bimoteur choisit alors la deuxième enveloppe décrite puis décolle avec une vitesse d'avancement positive à partir de la zone de décollage 70.

Si un moteur du giravion 1 tombe en panne au point PT1, le pilote peut soit se poser sur le sol 62, soit utiliser la puissance maximale d'urgence élevée pour continuer son vol. Il est à noter que la première enveloppe ne permettrait pas une telle procédure, ou du moins avec une masse transportable relativement importante.

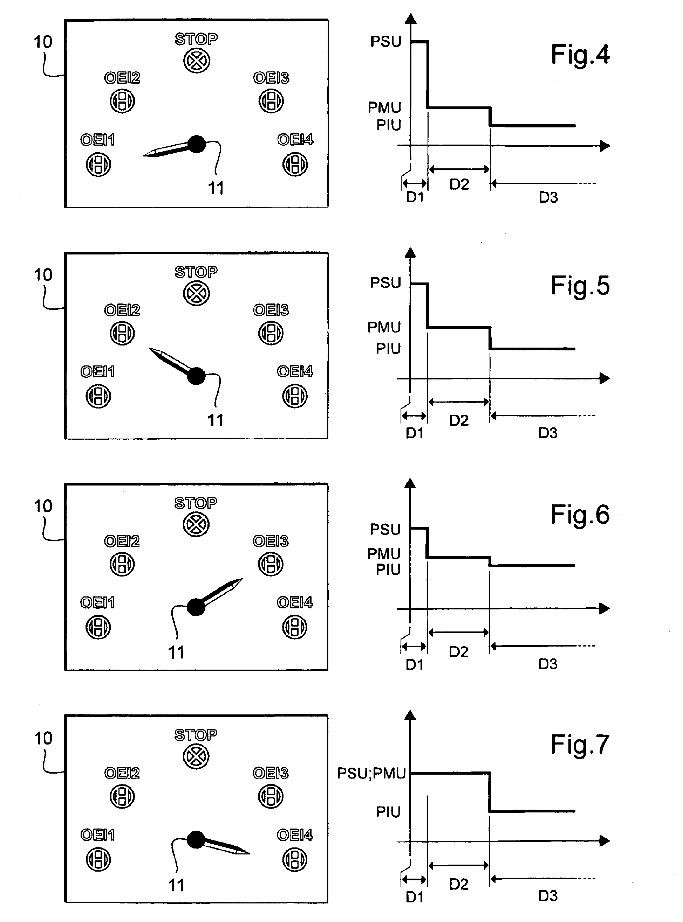

Selon une variante explicitée sur les figures 4 à 7, la liste d'enveloppes d'utilisation peut comprendre au moins quatre enveloppes, à savoir :
- une première enveloppe d'utilisation correspondant à la première position OEI1 du moyen de sélection 10, pour décoller à partir d'une plateforme 60 située à une première hauteur, de 50 fts (soit 15,24 mètres) par exemple, avec une masse maximale transportable par l'aéronef 1,
- une deuxième enveloppe d'utilisation correspondant à la deuxième position OEI2 du moyen de sélection 10, pour décoller à partir d'une plateforme 60 située à une deuxième hauteur, supérieure à la première hauteur soit de 100 fts (soit 30,48 mètres) par exemple, avec une masse maximale transportable par l'aéronef 1,
- une troisième enveloppe d'utilisation correspondant à la troisième position OEI3 du moyen de sélection 10, pour décoller à partir d'une zone de décollage 70 ayant une première aire de dégagement, d'une longueur de 25m en avant de l'aéronef par exemple, et distincte d'une plateforme 60 avec une masse maximale transportable par l'aéronef 1,
- une quatrième enveloppe d'utilisation correspondant à la quatrième position OEI4 du moyen de sélection 10, pour décoller à partir d'une zone de décollage 70 ayant une deuxième aire de dégagement, d'une longueur de 100 m en avant de l'aéronef par exemple, et distincte d'une plateforme 60 avec une masse maximale transportable par l'aéronef 1.

La première et la deuxième enveloppes sont relatives au décollage d'une plateforme, la troisième et la quatrième enveloppes étant relatives au décollage d'une aire dégagée distincte d'une plateforme.

Chaque enveloppe possède alors un premier régime d'urgence durant lequel un moteur peut développer une puissance de super urgence durant un premier temps donné, un deuxième régime d'urgence durant lequel un moteur peut développer une puissance maximale d'urgence durant un deuxième temps donné et un troisième régime d'urgence durant lequel un moteur peut développer une puissance intermédiaire d'urgence en continu, ces régimes d'urgence étant mis en oeuvre lorsqu'un moteur tombe en panne.

En référence à la figure 4, pour la première enveloppe, la puissance de super urgence atteint une valeur de super urgence élevée par exemple de l'ordre de 1100 kilowatts, la puissance maximale d'urgence atteint une valeur maximale d'urgence limitée, par exemple de l'ordre de 600 kilowatts, la puissance intermédiaire d'urgence étant égale à une valeur intermédiaire d'urgence limitée, par exemple de l'ordre de 450 kilowatts.

L'étagement des puissances d'urgence développées de cette première enveloppe privilégie la puissance de super urgence PSU au détriment des autres puissances d'urgence pour obtenir une masse maximale transportable lors d'un décollage à partir d'une plateforme, en suivant la procédure décrite précédemment.

En référence à la figure 5, pour la deuxième enveloppe d'utilisation, la puissance de super urgence atteint une première valeur de super urgence médiane par exemple de l'ordre de 1000 kilowatts, la puissance maximale d'urgence atteint une première valeur maximale d'urgence élevée par exemple de l'ordre de 700 kilowatts, la puissance intermédiaire d'urgence étant égale à une première valeur intermédiaire d'urgence médiane par exemple de l'ordre de 500 kilowatts.

Cette deuxième enveloppe permet d'obtenir une masse donnée transportable non négligeable. Par rapport à la première enveloppe, la deuxième enveloppe offre une puissance maximale d'urgence plus importante

Ainsi, en fonction de la masse à transporter et de la hauteur de la plateforme, un pilote sélectionne la première enveloppe ou la deuxième enveloppe.

En référence à la figure 6, pour la troisième enveloppe d'utilisation, la puissance de super urgence atteint une deuxième valeur de super urgence médiane, par exemple de l'ordre de 900 kilowatts, la puissance maximale d'urgence atteint une deuxième valeur maximale d'urgence élevée, par exemple de l'ordre de 650 kilowatts, la puissance intermédiaire d'urgence étant égale à une valeur intermédiaire d'urgence élevée, par exemple de l'ordre de 600 kilowatts.

Cette troisième enveloppe est adaptée à un décollage réalisé à partir d'une zone de décollage 70 ayant une première aire de dégagement, 25m par exemple. La présence d'une puissance maximale d'urgence permet la réalisation d'une mission avec une masse maximale transportable à la suite de la panne d'un moteur.

En référence à la figure 7, pour une quatrième enveloppe d'utilisation, la puissance de super urgence atteint une valeur de super urgence limitée, par exemple de l'ordre de 800 kilowatts, la puissance maximale d'urgence atteint une valeur maximale d'urgence élevée, par exemple de l'ordre de 800 kilowatts, la puissance intermédiaire d'urgence étant égale à une valeur intermédiaire d'urgence médiane, par exemple de l'ordre de 500 kilowatts.

Cette quatrième enveloppe est adaptée à un décollage réalisé à partir d'une zone de décollage 70 ayant une deuxième aire de dégagement, 100m par exemple, avec une masse maximale transportable.

## Revendications

1. Installation motrice (2) d'aéronef munie de deux moteurs (3, 4) et d'un moyen de contrôle (5) desdits moteurs (3, 4), ledit moyen de contrôle (5) comprenant une mémoire (6), ladite mémoire (6) contenant des informations pour faire fonctionner lesdits moteurs (3, 4) selon au moins deux enveloppes d'utilisation distinctes durant un nombre d'heures de vol maximal, chaque enveloppe d'utilisation comprenant au moins deux régimes d'utilisation distincts définis chacun par une puissance développée et une durée d'utilisation de cette puissance développée,
**caractérisée en ce que** lesdites au moins deux enveloppes comprennent une enveloppe permettant d'assurer un décollage de manière optimale à partir d'une plateforme et une autre enveloppe permettant d'assurer un décollage de manière optimale à partir de zones de décollage n'incluant pas les plateformes.

2. Installation motrice selon la revendication 1,
**caractérisée en ce qu'**elle comporte un moyen de sélection (10) manoeuvrable par un pilote, ledit moyen de sélection (10) étant lié au moyen de contrôle (5) afin que ledit pilote puisse choisir l'enveloppe d'utilisation selon laquelle chaque moteur (3, 4) doit fonctionner.

3. Installation motrice selon l'une quelconque des revendications 1 à 2,
**caractérisée en ce qu'**elle comporte un moyen de sécurité (30) pour garantir la sélection volontaire d'une enveloppe avant le début d'un vol.

4. Installation motrice selon l'une quelconque des revendications 1 à 3,
**caractérisée en ce que**, ladite installation motrice (2) comprend un moyen de visualisation (20) affichant soit l'enveloppe d'utilisation, soit le régime d'utilisation mis en oeuvre par l'installation motrice (2), soit l'enveloppe d'utilisation et le régime d'utilisation de cette l'enveloppe d'utilisation qui sont mis en oeuvre par l'installation motrice (2).

5. Installation motrice selon l'une quelconque des revendications 1 à 4,
**caractérisée en ce que** chaque enveloppe d'utilisation comporte au moins un régime d'urgence utilisable lorsqu'un desdits moteurs (3, 4) tombe en panne, un régime d'urgence d'une enveloppe diffère d'un régime d'urgence d'une autre enveloppe.

6. Installation motrice selon la revendication 2,
**caractérisée en ce que** ledit moyen de sélection (10) comporte au moins deux positions (OEI1, OEI2, OEI3, OEI4) associées chacune à une enveloppe d'utilisation, lesdites deux positions (OEI1, OEI2, OEI3, OEI4) étant à choisir dans une liste incluant :
- une première position (OEI1) pour décoller à partir d'une plateforme (60) située à une première hauteur avec une masse maximale transportable par l'aéronef (1) qui requiert le fonctionnement des moteurs (3, 4) selon une première enveloppe d'utilisation,
- une deuxième position (OEI2) pour décoller à partir d'une plateforme (60) située à une deuxième hauteur avec une masse maximale transportable par l'aéronef (1) qui requiert le fonctionnement des moteurs (3, 4) selon une deuxième enveloppe d'utilisation,
- une troisième position (OEI3) pour décoller à partir d'une zone de décollage (70) ayant une première aire de dégagement et distincte d'une plateforme (60) avec une masse maximale transportable par l'aéronef (1) qui requiert le fonctionnement des moteurs selon une troisième enveloppe d'utilisation,
- une quatrième position (OEI4) pour décoller à partir d'une zone de décollage (70) ayant une deuxième aire de dégagement et distincte d'une plateforme (60) avec une masse maximale transportable par l'aéronef (1) qui requiert le fonctionnement des moteurs selon une quatrième enveloppe d'utilisation.

7. Aéronef (1),
**caractérisé en ce qu'**il comporte une installation motrice (2) selon l'une quelconque des revendications 1 à 6.

8. Procédé de pilotage d'un aéronef (1) muni d'une installation motrice (2) comportant deux moteurs (3, 4) et d'un moyen de contrôle (10) dudit moteur (3, 4), au cours duquel :
- on définit une liste d'enveloppes d'utilisation des moteurs (3, 4), ladite liste comprenant au moins deux enveloppes d'utilisation distinctes associées à un même nombre d'heures de vol maximal des moteurs (3, 4), chaque enveloppe d'utilisation comprenant au moins deux régimes d'utilisation définis chacun par une puissance développée et une durée d'utilisation de cette puissance développée,
- on mémorise lesdites enveloppes d'utilisation dans ledit moyen de contrôle (5), et
- on choisit avant le décollage l'enveloppe à utiliser parmi ladite liste en fonction de la mission à effectuer; et
**caractérisée en ce qu'**on mémorise au moins deux enveloppes comprenant une enveloppe permettant d'assurer un décollage de manière optimale à partir d'une plateforme et une autre enveloppe permettant d'assurer un décollage de manière optimale à partir de zones de décollage n'incluant pas les plateformes.

9. Procédé selon la revendication 8,
**caractérisée en ce qu'**on définit pour chaque enveloppe d'utilisation au moins un régime d'urgence utilisable lorsqu'un desdits moteurs (3, 4) tombe en panne, un régime d'urgence d'une enveloppe différent d'un régime d'urgence d'une autre enveloppe.

10. Procédé selon la revendication 8,
**caractérisé en ce que** ladite liste comporte au moins deux enveloppes d'utilisation distinctes pouvant être utilisées selon un même nombre d'heures de vol, ladite liste comprenant :
- une première enveloppe d'utilisation pour décoller à partir d'une plateforme (60) située à une première hauteur avec une masse maximale transportable par l'aéronef (1),
- une deuxième enveloppe d'utilisation pour décoller à partir d'une plateforme (60) située à une deuxième hauteur avec une masse maximale transportable par l'aéronef (1),
- une troisième enveloppe d'utilisation pour décoller à partir d'une zone de décollage (70) ayant une première aire de dégagement et distincte d'une plateforme (60) avec une masse maximale transportable par l'aéronef (1),
- une quatrième enveloppe d'utilisation pour décoller à partir d'une zone de décollage (70) ayant une deuxième aire de dégagement et distincte d'une plateforme (60) avec une masse maximale transportable par l'aéronef (1).

## Patentansprüche

1. Triebwerk (2) eines Flugzeugs mit zwei Motoren (3, 4) und einem Mittel (5) zur Steuerung der Motoren (3, 4), wobei das Mittel (5) zur Steuerung einen Speicher (6) aufweist, wobei der Speicher (6) Informationen für den Betrieb der Motoren (3, 4) in mindestens zwei unterschiedlichen Betriebsbereichen während einer maximalen Anzahl an Flugstunden aufweist, wobei jeder Betriebsbereich mindestens zwei unterschiedliche Arbeitsbereiche aufweist, die jeweils durch eine entwickelte Leistung und eine Betriebsdauer dieser entwickelten Leistung definiert sind,
**dadurch gekennzeichnet, dass** die mindestens zwei Betriebsbereiche einen Betriebsbereich aufweisen, der das optimale Starten ausgehend von einer Plattform sicherstellen kann, und einen anderen Betriebsbereich aufweisen, der das optimale Starten ausgehend von Startbereichen, die keine Plattformen umfassen, sicherstellen kann.

2. Triebwerk nach Anspruch 1,
**dadurch gekennzeichnet, dass** es ein von einem Piloten bedienbares Auswahlmittel (10) aufweist, wobei das Auswahlmittel (10) mit dem Mittel (5) zur Steuerung verbunden ist, damit der Pilot den Betriebsbereich wählen kann, in dem jeder Motor (3, 4) funktionieren soll.

3. Triebwerk nach einem der Ansprüche 1 bis 2,
**dadurch gekennzeichnet, dass** es ein Sicherheitsmittel (30) aufweist, um die bewußte Auswahl eines Betriebsbereichs vor dem Beginn eines Fluges zu garantieren.

4. Triebwerk nach einem der Ansprüche 1 bis 3,
**dadurch gekennzeichnet, dass** das Triebwerk (2) ein Anzeigemodul (20) aufweist, welches entweder den Betriebsbereich anzeigt oder den Arbeitsbereich, in dem das Triebwerk (2) arbeitet, oder den Betriebsbereich und den Arbeitsbereich dieses Betriebsbereichs, in dem das Triebwerk (2) arbeitet.

5. Triebwerk nach einem der Ansprüche 1 bis 4,
**dadurch gekennzeichnet, dass** jeder Betriebsbereich mindestens einen Notbetriebsbereich aufweist, der angewendet werden kann, wenn einer der Motoren (3, 4) ausfällt, wobei sich ein Notbetriebsbereich eines Betriebsbereichs von einem Notbetriebsbereich eines anderen Betriebsbereichs unterscheidet.

6. Triebwerk nach Anspruch 2,
**dadurch gekennzeichnet, dass** das Auswahlmittel (10) mindestens zwei Stellungen (OEI1, OEI2, OEI3, OEI4) aufweist, die jeweils einem Betriebsbereich zugeordnet sind, wobei die zwei Stellungen (OEI1, OEI2, OEI3, OEI4) aus einer Liste gewählt sind, die umfasst:
- eine erste Stellung (OEI1) zum Starten ausgehend von einer auf einer ersten Höhe gelegenen Plattform (60) mit einer von dem Flugzeug (1) maximal transportierbaren Last, die den Betrieb der Motoren (3, 4) in einem ersten Betriebsbereich erfordert;
- eine zweite Stellung (OEI2) zum Starten ausgehend von einer auf einer zweiten Höhe gelegenen Plattform (60) mit einer von dem Flugzeug (1) maximal transportierbaren Last, die den Betrieb der Motoren (3, 4) in einem zweiten Betriebsbereich erfordert;
- eine dritte Stellung (OEI3) zum Starten ausgehend von einem Startplatz (70) mit einem ersten Startkorridor, der sich von einer Plattform (60) unterscheidet, mit einer von dem Flugzeug (1) maximal transportierbaren Last, die einen Betrieb der Motoren in einem dritten Betriebsbereich erfordert;
- eine vierte Stellung (OEI4) zum Starten ausgehend von einem Startplatz (70) mit einem zweiten Startkorridor, der sich von einer Plattform (60) unterscheidet, mit einer von dem Flugzeug (1) maximal transportierbaren Last, die den Betrieb der Motoren in einem vierten Betriebsbereich erfordert.

7. Flugzeug (1),
**dadurch gekennzeichnet, dass** es ein Triebwerk (2) nach einem der Ansprüche 1 bis 6 aufweist.

8. Verfahren zum Steuern eines Flugzeugs (1), welches mit einem Triebwerk (2) versehen ist, das zwei Motoren (3, 4) und ein Mittel (10) zum Steuern der Motoren (3, 4) aufweist, währenddessen:
- eine Liste von Betriebsbereichen der Motoren (3, 4) definiert wird, wobei die Liste mindestens zwei sich unterscheidende Betriebsbereiche aufweist, die zu einer gleichen maximalen Flugstundenzahl der Motoren (3, 4) gehören, wobei jeder Betriebsbereich mindestens zwei Arbeitsbereiche aufweist, die jeweils durch eine entwickelte Leistung und eine Betriebsdauer dieser entwickelten Leistung definiert sind,
- die Betriebsbereiche in dem Mittel (5) zum Steuern gespeichert werden, und
- vor dem Start der anzuwendende Betriebsbereich aus der Liste in Abhängigkeit von der auszuführenden Aufgabe ausgewählt wird,
**dadurch gekennzeichnet, dass** mindestens zwei Betriebsbereiche gespeichert werden, die einen Betriebsbereich enthalten, der einen optimalen Start ausgehend von einer Plattform sicherstellen kann, und einen anderen Betriebsbereich, der das optimale Starten ausgehend von Startbereichen, die keine Plattformen umfassen, sicherstellen kann.

9. Verfahren nach Anspruch 8,
**dadurch gekennzeichnet, dass** für jeden Betriebsbereich mindestens ein Notbetriebsbereich definiert wird, der anwendbar ist, wenn einer der Motoren (3, 4) ausfällt, wobei ein Notbetriebsbereich eines Betriebsbereichs sich von dem Notbetriebsbereich eines anderen Betriebsbereichs unterscheidet.

10. Verfahren nach Anspruch 8,
**dadurch gekennzeichnet, dass** die Liste mindestens zwei sich unterscheidende Betriebsbereiche aufweist, die für die gleiche Anzahl an Flugstunden verwendet werden können, wobei die Liste umfasst:
- einen ersten Betriebsbereich zum Starten ausgehend von einer auf einer ersten Höhe gelegenen Plattform (60) mit einer von dem Flugzeug (1) maximal transportierbaren Last,
- einen zweiten Betriebsbereich zum Starten ausgehend von einer auf einer zweiten Höhe gelegenen Plattform (60) mit einer von dem Flugzeug (1) maximal transportierbaren Last,
- einem dritten Betriebsbereich zum Starten ausgehend von einem Startplatz (70) mit einem ersten Startkorridor, der sich von einer Plattform (60) unterscheidet, mit einer von dem Flugzeug (1) maximal transportierbaren Last,
- einem vierten Betriebsbereich zum Starten ausgehend von einem Startplatz (70) mit einem zweiten Startkorridor, der sich von einer Plattform (60) unterscheidet, mit einer von dem Flugzeug (1) maximal transportierbaren Last.

## Claims

1. A powerplant (2) for an aircraft, equipped with two engines (3, 4) and a control means (5) for controlling the said engines (3, 4), wherein the said control means (5) comprises a memory (6), wherein the said memory (6) includes information for operating the said engines (3, 4) in accordance with at least two distinct utilisation envelopes for a maximum number of hours of flight, wherein each utilisation envelope comprises at least two distinct utilisation regimes which are each defined by a power that is developed and a period during which this developed power is used,
**characterised in that** the said at least two envelopes comprise an envelope enabling optimum take-off from a platform and another envelope enabling optimum take-off from take-off zones other than platforms.

2. A powerplant according to Claim 1, **characterised in that** it comprises a selection means (10) that may be manoeuvred by a pilot, wherein the said selection means (10) is connected to the control means (5) such that the said pilot may select the utilisation envelope in accordance with which each engine (3, 4) is to operate.

3. A powerplant according to any one of Claims 1 to 2, **characterised in that** it comprises a security means (30) for ensuring deliberate selection of an envelope before a flight begins.

4. A powerplant according to any one of Claims 1 to 3, **characterised in that** the said powerplant (2) comprises a visual display means (20) which displays the utilisation envelope or the utilisation regime which is implemented by the powerplant (2) or the utilisation envelope and the utilisation regime of this utilisation envelope that are implemented by the powerplant (2).

5. A powerplant according to any one of Claims 1 to 4, **characterised in that** each utilisation envelope comprises at least one emergency regime which may be used if one of the said engines (3, 4) fails, an emergency regime of one envelope differs from an emergency regime of another envelope.

6. A powerplant according to Claim 2, **characterised in that** the said selection means (10) comprises at least two positions (OEI1, OEI2, OEI3, OEI4) which are each associated with a utilisation envelope, wherein the said two positions (OEI1, OEI2, OEI3, OEI4) are to be selected from a list including:
- a first position (OEI1) for take-off from a platform (60) located at a first height and having a maximum mass that can be transported by the aircraft (1), which requires operation of the engines (3, 4) in accordance with a first utilisation envelope,
- a second position (OEI2) for take-off from a platform (60) located at a second height and having a maximum mass that can be transported by the aircraft (1), which requires operation of the engines (3, 4) in accordance with a second utilisation envelope,
- a third position (OEI3) for take-off from a take-off zone (70) having a first clearance area, other than a platform (60), and having a maximum mass that can be transported by the aircraft (1), which requires operation of the engines in accordance with a third utilisation envelope,
- a fourth position (OEI4) for take-off from a take-off zone (70) having a second clearance area, other than a platform (60), having a maximum mass that can be transported by the aircraft (1), which requires operation of the engines in accordance with a fourth utilisation envelope.

7. An aircraft (1), **characterised in that** it comprises a powerplant (2) according to any one of Claims 1 to 6.

8. A method for piloting an aircraft (1) equipped with a powerplant (2) comprising two engines (3, 4) and a control means (10) for controlling the said engine (3, 4), in the course of which:
- a list of utilisation envelopes of the engines (3, 4) is defined, wherein the said list comprises at least two distinct utilisation envelopes associated with the same maximum number of hours of flight for the engines (3, 4), wherein each utilisation envelope comprises at least two utilisation regimes which are each defined by a power that is developed and a period during which this developed power is used,
- the said utilisation envelopes are stored in the said control means (5), and
- before take-off the envelope to be utilised is selected from the said list as a function of the mission to be performed; and
**characterised in that** at least two envelopes are stored, said envelopes comprising an envelope enabling optimum take-off from a platform and another envelope enabling optimum take-off from take-off zones other than platforms.

9. A method according to Claim 8, **characterised in that** there is defined for each utilisation envelope at least one emergency regime which may be used if one of the said engines (3, 4) fails, wherein an emergency regime of one envelope differs from an emergency regime of another envelope.

10. A method according to Claim 8, **characterised in that** the said list comprises at least two distinct utilisation envelopes which may be used for the same number of hours of flight, wherein the said list comprises:
- a first utilisation envelope for take-off from a platform (60) located at a first height and having a maximum mass that can be transported by the aircraft (1),
- a second utilisation envelope for take-off from a platform (60) located at a second height and having a maximum mass that can be transported by the aircraft (1),
- a third utilisation envelope for take-off from a take-off zone (70) having a first clearance area, other than a platform (60), and having a maximum mass that can be transported by the aircraft (1),
- a fourth utilisation envelope for take-off from a take-off zone (70) having a second clearance area, other than a platform (60), having a maximum mass that can be transported by the aircraft (1).
